# EUROPÄISCHE PATENTSCHRIFT

(11) **EP 1 888 932 B1**
(45) Veröffentlichungstag und Bekanntmachung des Hinweises auf die Patenterteilung: **10.06.2009**
(21) Anmeldenummer: 07724217.0
(22) Anmeldetag: 12.04.2007
(51) Int. Cl.: F16D 33/00

(54) **HYDRODYNAMISCHE KUPPLUNG**
HYDRODYNAMIC COUPLING
ACCOUPLEMENT HYDRODYNAMIQUE

(30) Priorität: 13.04.2006 DE 102006017975
(43) Veröffentlichungstag der Anmeldung: 20.02.2008
(73) Patentinhaber: Voith Turbo GmbH & Co. KG, 89522 Heidenheim (DE)
(72) Erfinder: HOFFELD, Harald, 74564 Crailsheim (DE)
(74) Vertreter: Weitzel, Wolfgang
(86) Internationale Anmeldenummer: PCT/EP2007/003276
(87) Internationale Veröffentlichungsnummer: WO 2007/118683

(56) Entgegenhaltungen:
- WO-A-01/18429
- WO-A-82/04107
- FR-A- 2 561 342

## Beschreibung

Die Erfindung betrifft eine hydrodynamische Kupplung, insbesondere eine Turbokupplung, im einzelnen mit den Merkmalen aus dem Oberbegriff des Anspruchs 1.

Hydrodynamische Kupplungen mit Schaltkupplungen zur Synchronisierung, insbesondere in Form von fliehkraftbetätigten Reibkupplungen, sind in einer Vielzahl von Ausführungen bekannt. Siehe beispielsweise nur WO 82/04107 A1 oder DE 199 42 578 C2.

In WO 82/04107 A1 wird eine Schaltkupplung beschrieben, welche durch einen fliehkraftabhängigen Flüssigkeitsdruck betätigbar ist. Bei dieser Ausführung ist die Synchronkupplung ausserhalb der hydrodynamischen Kupplung angeordnet. Die Synchronkupplung und die hydrodynamischen Kupplung werden in einer Art und Weise miteinander gekoppelt, welche einerseits zu einer erheblichen Vergrößerung des Bauraumbedarfs in axialer Richtung führt und andererseits den konstruktiven Aufwand erheblich erhöht.

Die Druckschrift DE 199 42 578 C2 beschriebt die konstruktive Ausführung einer hydrodynamischen Kupplung, in welcher eine Synchronkupplung derart integriert werden kann, ohne dass dies zusätzlichen Platzbedarf gegenüber einer konventionellen hydrodynamischen Kupplung ohne Synchronkupplung erfordert. Solche Kupplungen haben sich bisher bestens bewährt. Durch die Integration der Synchronkupplung in die hydrodynamische Kupplung wird Bauraum gespart. Der Fertigungs- und Montageaufwand ist gering und damit auch die Herstellungskosten.

Ein Nachteil besteht jedoch darin, dass der Reibbelag zwischen den beiden Kupplungselementen der hydrodynamischen Kupplung einem gewissen Verschleiß unterliegt. Dieser Verschleiß ist von außen nicht erkennbar. Auch kann die Synchronkupplung bei weitgehend verschlissenem Reibbelag noch einwandfrei arbeiten. Es wird somit Funktionstüchtigkeit vorgetäuscht, obwohl diese nur noch für eine kurze Zeitspanne gegeben ist. Bei hydraulischen Kupplungen mit integrierten Synchronkupplungen kann dies in sicherheitsrelevanten Anlagen gefährlich sein.

Um sich Gewissheit über den tatsächlichen Verschleißzustand des Reibbelags zu verschaffen, muss die gesamte Einheit ausgebaut und zerlegt werden. Um sicher zu gehen, nimmt man das Ausbauen vorsorglich zu einem frühen Zeitpunkt vor, somit bereits dann, wenn noch kein völliger Verschleiß des Reibbelages zu erwarten ist. Dies bedeutet, dass das Ausbauen aus Sicherheitsgründen mehrere Male vorgenommen werden muss. Dies erfordert Personalaufwand und ist daher kostspielig.

Der Erfindung liegt die Aufgabe zugrunde, eine hydrodynamische Kupplung gemäß dem Oberbegriff von Anspruch 1 derart zu gestalten, dass der Verschleißzustand des Reibbelages erkannt werden kann, ohne dass die gesamte Kupplung ausgebaut und zerlegt werden muss.

Demgemäß werden das Innenrad wie auch die Schale jeweils mit einer Bohrungversehen. Die beiden Bohrungen sind derart angeordnet, dass sie bei relativem Verdrehen von Innenrad und Schale in miteinander fluchtende Positionen und damit in Überdeckung verbringbar sind. Die Bohrungen sind im äußeren Bereich, beispielsweise beginnend auf dreiviertel des Radius der Kupplung, gemessen von der Drehachse aus. Im allgemeinen werden die beiden Bohrungen zur Drehachse parallel verlaufen. Dies muss jedoch nicht so sein. Eine gewisse Neigung von bis zu 60 Grad wäre denkbar.

Die Bohrungen müssen nicht unbedingt kreisrunden Querschnitt haben, obwohl dies natürlich aus Fertigungsgründen das Nächstliegende ist.

Die Bohrung der Schale wird etwas größer bemessen, als die Bohrung des Innenrades.

Ist der Zeitpunkt gekommen, dass man eine Inspektion des Reibbelages vornehmen möchte, so unternimmt man folgendes:
- Durch die größere Bohrung der Schale wird ein Stift hindurchgeführt und in die kleinere Bohrung im Innenrad eingesetzt.
- Nunmehr wird das Innenrad in radialer Richtung auf die Schale hin bewegt.
- Sei es durch radiales Verschieben, so dass im Reibbereich keinerlei Spalt verbleibt.
- Der Stift wird nunmehr als Indikator benutzt. Man misst nur den Abstand zwischen Stift und einem ausgewählten Punkt an der Schale - wohlgemerkt - an einer von außen her leicht zugänglichen Stelle. Damit lässt sich die verbleibende Stärke des Reibbelages ermitteln, soweit eine solche überhaupt noch vorhanden ist.

Die Erfindung ist anhand der Zeichnung näher erläutert. Darin ist im einzelnen folgendes dargestellt:
- Figur 1: zeigt eine erste Ausführungsform der Erfindung mit radial verschiebbaren Segmenten.
- Figur 2: zeigt in Draufsicht und im Ausschnitt das Innenrad, das aus Segmenten aufgebaut ist, die ihrerseits verschwenkbar sind.

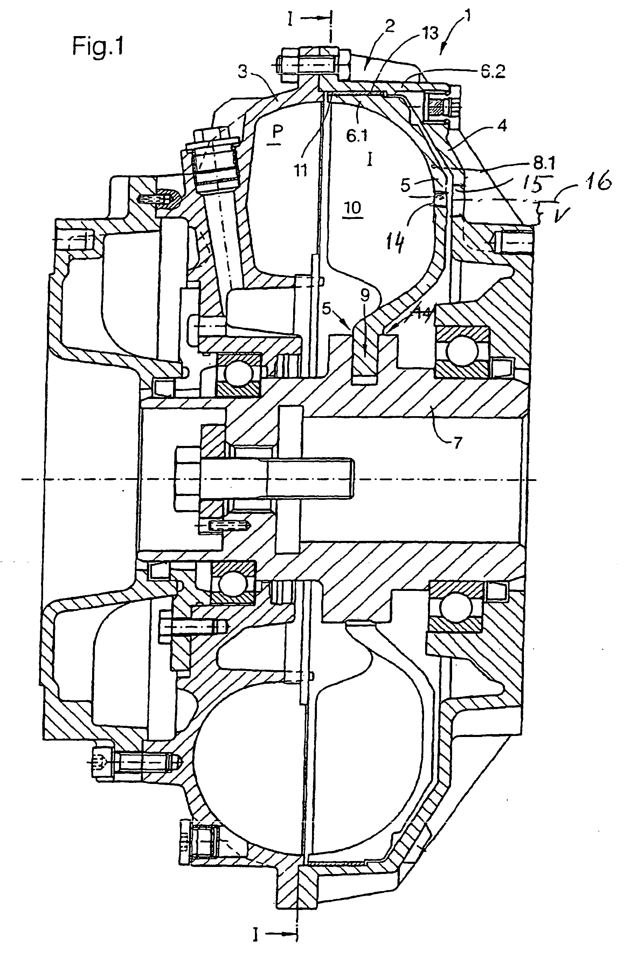

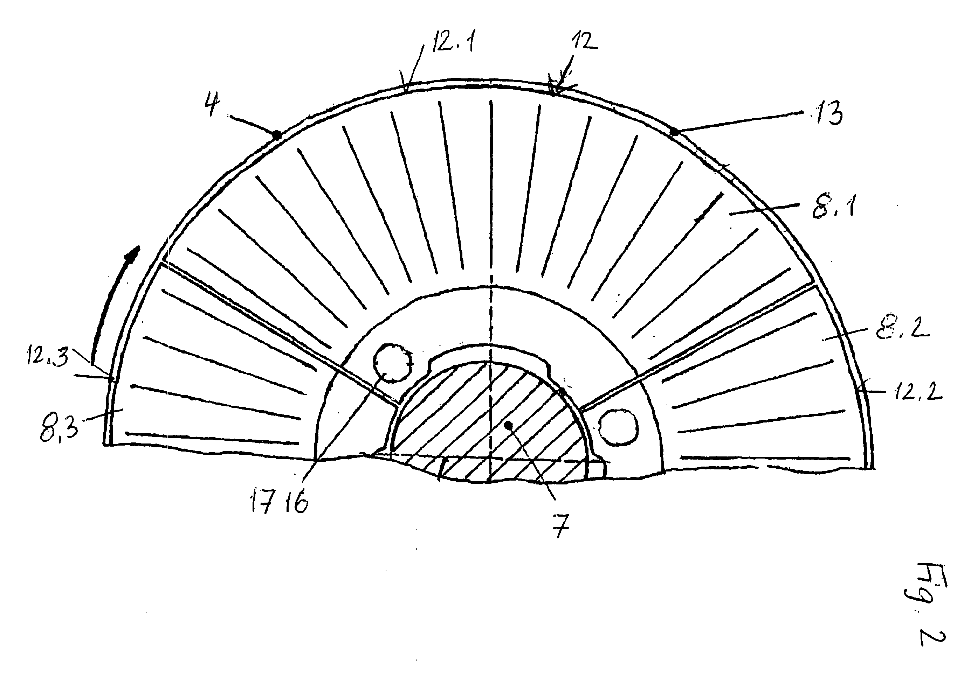

Figur 1 zeigt den Grundaufbau einer erfindungsgemäß gestalteten hydrodynamischen Kupplung 1, insbesondere einer Turbokupplung mit integrierter Synchronkupplung 2 umfassend zwei Schaufelräder, ein Außenrad 3 und ein von einer, mit dem Außenrad 3 gekoppelten Kupplungsschale 4 wenigstens teilweise umschlossenes Innenrad 5. Das Außenrad 3 fungiert dabei vorzugsweise als Pumpenrad, während das Innenrad 5 die Funktion des Turbinenrades übernimmt. Das Außenrad 3 ist zu diesem Zweck beim Einsatz in Antriebssträngen wenigstens mittelbar mit der Antriebsseite, insbesondere einer Antriebsmaschine, drehfest verbunden, während das, das Turbinenrad bildende Innenrad 5 mit der Abtriebsseite gekoppelt ist. Dies gilt für die Leistungsübertragung in einem Antriebsstrang im Traktionsbetrieb von der Antriebsmaschine zur Abtriebsseite betrachtet. Die Synchronkupplung 2 ist in der hydrodynamischen Kupplung 1 integriert und umfasst wenigstens zwei reibschlüssig miteinander in Wirkverbindung bringbare Kupplungselemente, ein erstes Kupplungselement 6.1 und ein zweites Kupplungselement 6.2. Erfindungsgemäß werden die Kupplungselemente von der Kupplungsschale 4 und dem Innenrad 5 der hydrodynamischen Kupplung gebildet. Das Innenrad 5 bildet dabei das Kupplungselement 6.1 und ist erfindungsgemäß als mehrteiliger Fliehkraftkörper ausgebildet. Dies bedeutet, dass das Innenrad 5 beziehungsweise das Kupplungselement 6.1 in Umfangsrichtung in wenigstens zwei Segmente unterteilt ist, welche in ihrer Gesamtheit bei Lagerung beziehungsweise Führung auf einer Profilwelle beziehungsweise -nabe 7 unter Fliehkrafteinwirkung wenigstens in radialer Richtung bewegbar sind. Vorzugsweise erfolgt die Unterteilung in drei einzelne Segmente 8.1, 8.2 und 8.3, siehe Figur 2. Die einzelnen Segmente bilden dabei bei Aneinanderreihung in Umfangsrichtung die bauliche Einheit Innenrad 5 und sind vorzugsweise hinsichtlich ihrer geometrischen Abmessungen zueinander identisch ausgeführt. Da über das Innenrad 5 in einer hydrodynamischen Kupplung 1 Drehmomente zu übertragen sind, ist es erforderlich, dass das Innenrad 5, insbesondere die einzelnen Segmente in Umfangsrichtung betrachtet zumindest derart geführt sind, dass eine Mitnahmefunktion gewährleistet ist, während in radialer Richtung eine Bewegbarkeit unter Fliehkraftwirkung der einzelnen Segmente 8.1 bis 8.3 gegeben ist. Zu diesem Zweck sind Mittel zur Führung der einzelnen Segmente 8.1 bis 8.3 vorgesehen, welche in der Regel von der Profilwelle beziehungsweise -nabe 7 gebildet werden. Diese ist wenigstens mittelbar - je nach Funktion des Innenrades 5 - mit der Abtriebsseite drehfest verbindbar. Die Profilwelle beziehungsweise -nabe 7 weist dazu ein entsprechendes Mitnehmerprofil 9 oder einen entsprechenden Schwenkzapfen 17 auf.

Während des Anfahrvorganges beim Einsatz der hydrodynamischen Kupplung 1 mit einem Antriebsstrang wird dabei das Drehmoment weiterhin größtenteils hydrodynamisch über den zwischen Außenrad 3 und Innenrad 5 bei Funktion als Pumpenrad P und Turbinenrad T über die sich im torusförmigen Arbeitsraum 10 einstellende Strömung von Betriebsmittel übertragen. Der sanfte Anlauf unter Ausnutzung der Vorteile einer hydrodynamischen Leistungsübertragung bleibt damit erhalten. Allerdings werden mit zunehmender Abtriebsdrehzahl aufgrund der bei Rotation sich einstellenden Fliehkraftwirkung auf die einzelnen Segmente 8.1 bis 8.3 des Innenrades diese immer stärker in Richtung der Kupplungsschale 4 gedrückt, bis aufgrund der Anpressung der Segmente 8.1 bis 8.3 gegen die Kupplungsschale 4 ein Reibschluss entsteht. In diesem Zustand ist die Kupplung aufgrund der Kopplung zwischen Außenrad 3, das heißt Pumpenrad P und Kupplungsschale 4 sowie dem Innenrad, synchronisiert. Alle Elemente laufen mit der gleichen Drehzahl um.

Da während des Anfahrvorganges die einzelnen Segmente 8.1 bis 8.3 am Innenumfang 11 der Kupplungsschale 4 gleiten, bedeutet dies, dass die einzelnen Elemente der Reibpaarung zumindest im Bereich des zu bildenden Reibschlusses gute Gleit- und Verschleißeigenschaften aufweisen müssen. Maßgeblich für die Verschleißfestigkeit der sich bei der Synchronkupplung 2 einstellenden Reibpaarung zwischen Innenrad 5 und Kupplungsschale 4 sind dabei die sich einstellende Flächenpressung, die spezifische Reibleistung und die spezifische Reibarbeit. Zur Minimierung des Verschleißes werden daher entweder entsprechende Werkstoffe für die Kupplungsschale 4 und das Innenrad 5, insbesondere die einzelnen Segmente 8.1 bis 8.3 verwendet oder diese mit einer entsprechenden Beschichtung versehen. Vorzugsweise wird wenigstens für die Herstellung von Kupplungsschale 4 und Pumpenrad, das heißt Außenrad 3 auf, konventionelle Materialien zurückgegriffen, welche üblicherweise für die Herstellung der einzelnen Elemente der hydrodynamischen Kupplung 1 Verwendung finden, beispielsweise Späroguss.

Für die Wahl des Materials für das Innenrad 5 beziehungsweise die einzelnen Innenradsegmente 8.1 bis 8.3 werden nachfolgende Überlegungen berücksichtigt. Dabei ist es zur Erhöhung der Verfügbarkeit vorteilhaft, eine geeignete Reibpaarung zwischen Kupplungsschale 4 und den Segmenten 8.1 bis 8.3 des Innenrades 5 vorzusehen. Dabei werden entweder an einem der Elemente oder an beiden - insbesondere am Innenumfang 11 der Kupplungsschale und am Außenumfang 12 des Innenrades 5, insbesondere jeweils am Außenumfang 12.1 des Segmentes 8.1, am Außenumfang 12.2 des Segmentes 8.2, und 12.3 des Segmentes 8.3 Beschichtungen mit einem Reibbelag 13 vorgesehen. Dabei kann der Reibbelag zum einen lediglich am Innenumfang 11 der Kupplungsschale 4 oder am Außenumfang 12 des Innenrades 5 beziehungsweise der einzelnen Segmente 8.1 bis 8.3 angebracht werden, denkbar ist jedoch auch, beide - die Kupplungsschale 4 an deren Innenumfang 11 und das Innenrad 5 am Außenumfang 12 beziehungsweise den einzelnen Außenumfängen 12.1 bis 12.3 in den einzelnen Segmenten 8.1 bis 8.3 mit einem entsprechenden Reibbelag zu beschichten -, wobei in diesem Fall Reibpaarungen mit gleichen Materialien oder aber verschiedenen Materialien erzeugt verwendet werden können.

Man erkennt im Innenrad 5 eine Bohrung 14, und in der Schale 4 eine Bohrung 15. Bohrung 15 ist ersichtlich größer als Bohrung 14. Die Achsen der beiden Bohrungen 14 und 15 verlaufen parallel zur Drehachse der hydrodynamischen Kupplung. Sie liegen auf ein- und demselben oder einem abweichenden Radius. Beim gegenseitigen Verdrehen von Innenrad und Außenrad (und damit auch von Innenrad und Schale) findet ein Fluchten statt, so wie hier dargestellt (Überdeckung der Bohrungen). Siehe die gemeinsame Längsachse 16 der beiden Bohrungen. Die Achsen der beiden Bohrungen 14, 15 müssen nicht unbedingt miteinander fluchten. Es genügt, dass sich die Bohrungen - bei einer entsprechenden Winkelposition von Innenrad 5 und Schale 4 - wenigstens teilweise überlappen.

Durch die Bohrung 15 in der Schale 4 hindurch wird ein hier nicht gezeigter Messstift hindurchgeführt und in die Bohrung 14 im Innenrad 5 eingesetzt. Der Messstift kann in die Bohrung 14 eingeschraubt werden. Außerdem sind beide Bohrungen 14, 15 jeweils durch eine Blindschraube verschließbar.

Das hier angedeutete Maß V bedeutet den Abstand zwischen der Längsachse 16 zu der Bezugskante der Schale. Dieses Maß zeigt den Verschleiß an. Bei neuem Reibbelag 13 sollte es ein Minimum haben, und bei geschliffenem und verschlissenem Reibbelag 13 ein Maximum.

Statt dem hier vorgesehenen Prinzip mit zwei Bohrungen 14, 15 sowie mit einem Messstift kommt auch die folgende äquivalente Lösung in Betracht:

Das Innenrad 5 wird mit einem irgendwie gearteten Vorsprung oder einer Markierung versehen, die durch die Bohrung 15 hindurch von außen her ihrer Position erfassbar ist, und die bei einem Verschieben des Innenrades 5 radial nach außen bis zum Anschlag die Radialposition des genannten Vorsprunges oder sonstigen Mittels anzeigt, und somit eine Rückschluß auf die verbliebene Stärke des Reibbelages 13 zuläßt.

In Figur 2 erkennt man die drei genannten Segmente 8.1, 8.2, 8.3.

Während diese bei der Ausführungsform gemäß Figur 1 unmittelbar radial verschiebbar waren, sind sie nunmehr an ihren radial inneren Bereichen schwenkbar oder kippbar angelenkt. Auch hierdurch findet eine Radialbewegung des Segmentes statt, wenn auch nicht des kompletten Segmentes, wohl aber eines Teiles.

### Bezugszeichenliste

- 1: hydrodynamische Kupplung
- 2: Synchronkupplung
- 3: Außenrad
- 4: Kupplungsschale
- 5; 5.4: Innenrad
- 6.1: erstes Kupplungselement
- 6.2: zweites Kupplungselement
- 7: Profilwelle beziehungsweise Profilnabe
- 8: Segmente des Innenrades
- 8.1 - 8.4: Segmente des Innenrades
- 9: Mittel zur Führung, insbesondere Mitnehmerprofil
- 10: torusförmiger Arbeitsraum
- 11: Innenumfang der Kupplungsschale
- 12: Außenumfang des Innenrades
- 12.1 - 12.3: Außenumfang der Innenradsegmente 8.1 bis 8.3
- 13: Reibbelag
- 14: Bohrung im Innenrad
- 15: Bohrung in der Schale
- 16: Längsachse des Messstiftes
- 17: Schwenkzapfen

## Patentansprüche

1. Hydrodynamische Kupplung
mit zwei Schaufelrädern (3, 5), nämlich einem Außenrad (3) und einem Innenrad (5), die miteinander einen torusförmigen Arbeitsraum (10) bilden;
mit einer Kupplungsschale (4), die mit dem Außenrad (3) drehfest verbunden ist und die einen Teil des Innenrades (5) umschließt;
mit einer Synchronkupplung, umfassend zwei Kupplungselemente (6.1, 6.2), die mit der Fläche ihres Reibbelages (13) in Wirkverbindung bringbar sind;
wobei das Innenrad (5) in wenigstens zwei Segmente (8.1, 8.2, 8.3) unterteil ist, die radial verschiebbar oder um eine zur Drehachse parallele Achse verschwenkbar sind;
wobei das erste (6.1) der beiden Kupplungselemente von den Segmenten (8.1, 8.2, 8.3) gebildet ist;
**gekennzeichnet durch** die folgenden Merkmale:
das Innenrad (5) und die Kupplungsschale (4) weisen je eine Bohrung (14, 15) auf, die sich dem gemäß auf der hydrodynamischen Kupplung befinden und die beim Verdrehen von Innenrad (5) und Kupplungsschale (4) in Positionen verbringbar sind, die miteinander fluchten, oder in denen sich die Bohrungen wenigstens teilweise überlappen;
die Bohrung (15) der Kupplungsschale (4) ist größer als die Bohrung (14) des Innenrades (5);
die Bohrung des Innenrades (5) gilt bei wenigstens teilweiser Überdeckung der beiden Bohrungen (14, 15) als ein Messstift.

2. Hydrodynamische Kupplung nach Anspruch 1, **dadurch gekennzeichnet, dass** der Messstift in die Bohrung (14) des Innenrades (5) einschraubbar ist.

3. Hydrodynamische Kupplung nach einem der Ansprüche 1 oder 2, **dadurch gekennzeichnet, dass** wenigstens eine der beiden Bohrungen durch eine Blindschraube verschließbar ist.

4. Hydrodynamische Kupplung nach Anspruch 3, **dadurch gekennzeichnet, dass** als Blindschraube (15) in der Schale (4) eine Sichtschraube vorgesehen ist.

5. Hydrodynamische Kupplung nach einem der Ansprüche 1 oder 4, **dadurch gekennzeichnet, dass** die Positionen der Bohrungen (14, 15) so gewählt sind, dass bei maximal zulässigem Verschleiß des Reibbelages (13) und bei maximal möglicher radialer Bewegung des Segmentes (8.1, 8.2, 8.3) der Messstift am radial äußeren Durchmesser der Bohrung (15) der Schale (4) zur Anlage kommt.

6. Hydrodynamische Kupplung nach einem der Ansprüche 1 oder 5, **dadurch gekennzeichnet, dass** jedes Segment (8.1, 8.2, 8.3) eine Bohrung zur Aufnahme des Messstiftes enthält.

## Claims

1. A hydrodynamic coupling, comprising two blade wheels (3, 5), which are an outer wheel (3) and an inner wheel (5) which jointly form a toroidal working chamber (10), a coupling shell (4) which is connected in a torsionally rigid manner with the outer wheel (3) and encloses a portion of the inner wheel (5), and a synchronous coupling comprising two coupling elements (6.1, 6.2) which can be brought into operative connection with the surface of its friction lining (13), with the inner wheel (5) being subdivided into at least two segments (8.1, 8.2, 8.3) which are radially displaceable or are pivotable about an axis parallel to the rotational axis, with the first (6.1) of the two coupling elements being formed by the segments (8.1, 8.2, 8.3), **characterized by** the following features:
the inner wheel (5) and the coupling shell (4) each comprise a bore (14, 15) which are accordingly disposed on the hydrodynamic coupling and which can be brought to positions during the twisting of inner wheel (5) and
coupling shell (4) which are in alignment with each other or in which the bores overlap at least partly, the bore hole (15) of the coupling shell (4) is larger than the bore hole (14) of the inner wheel (5), and the bore hole of the inner wheel (5) applies as a measuring pin in the case of an at least partial overlap of the two bore holes (14, 15).

2. A hydrodynamic coupling according to claim 1, **characterized in that** the measuring pin can be screwed into the bore (14) of the inner wheel (5).

3. A hydrodynamic coupling according to one of the claims 1 or 2, **characterized in that** at least one of the two bore holes can be sealed by a blind screw.

4. A hydrodynamic coupling according to claim 3, **characterized in that** a peep holed bolt is provided as a blind screw (15) in the shell (4).

5. A hydrodynamic coupling according to one of the claims 1 or 4, **characterized in that** the positions of the bore holes (14, 15) are chosen in such a way that the measuring pin comes to rest on the radially outside diameter of the bore hole (15) of the shell (4) in the case of maximum permissible wear and tear of the friction lining (13) and in the case of maximum possible radial movement of the segment (8.1, 8.2, 8.3).

6. A hydrodynamic coupling according to one of the claims 1 or 5, **characterized in that** each segment (8.1, 8.2, 8.3) comprises a bore hole for receiving the measuring pin.

## Revendications

1. Accouplement hydrodynamique
avec deux roues à aubes (3, 5), à savoir une roue extérieure (3) et une roue intérieure (5), qui forment ensemble un espace de travail toroïdal (10) ;
avec une enveloppe d'accouplement (4), qui est reliée à la roue extérieure (3) de façon solidaire en rotation et renferme une partie de la roue intérieure (5) ;
avec un accouplement synchrone, comprenant deux éléments d'accouplement (6.1, 6.2) qui peuvent être mis en liaison active par la surface de leur garniture de friction (13) ;
dans lequel la roue intérieure (5) est divisée en au moins deux segments (8.1, 8.2, 8.3) capables de translation dans le sens radial ou de pivotement autour d'un axe parallèle à l'axe de rotation ;
dans lequel le premier (6.1) des deux éléments d'accouplement est formé par les segments (8.1, 8.2, 8.3) ;
**caractérisé en ce que** :
la roue intérieure (5) et l'enveloppe d'accouplement (4) présentent chacune un alésages (14, 15), lesquels alésages sont placés de manière correspondante sur l'accouplement hydrodynamique et peuvent être amenés, lors de la rotation de la roue intérieure (5) et de l'enveloppe d'accouplement (4), dans des positions alignées l'une sur l'autre ou dans lesquelles les alésages se recouvrent au moins partiellement ;
l'alésage (15) de l'enveloppe d'accouplement (4) est plus grand que l'alésage (14) de la roue intérieure (5) ;
l'alésage de la roue intérieure (5) fait fonction de goupille de mesure quand les deux alésages (14, 15) se recouvrent partiellement.

2. Accouplement hydrodynamique selon la revendication 1, **caractérisé en ce que** la goupille de mesure peut être vissée dans l'alésage (14) de la roue intérieure (5).

3. Accouplement hydrodynamique selon l'une des revendications 1 ou 2, **caractérisé en ce qu'**au moins un des deux alésages peut être obturé par un bouchon fileté.

4. Accouplement hydrodynamique selon la revendication 3, **caractérisé en ce qu'**un regard fileté est prévu dans l'enveloppe (4) pour servir de bouchon fileté (15).

5. Accouplement hydrodynamique selon l'une des revendications 1 ou 4, **caractérisé en ce que** les positions des alésages (14, 15) sont choisies de telle sorte qu'à l'usure maximale admissible de la garniture de friction (13) et au déplacement radial maximum possible du segment (8.1, 8.2, 8.3), la goupille de mesure vient reposer sur le diamètre extérieur dans le sens radial de l'alésage (15) de l'enveloppe (4).

6. Accouplement hydrodynamique selon l'une des revendications 1 ou 5, **caractérisé en ce que** chaque segment (8.1, 8.2, 8.3) contient un alésage pour recevoir la goupille de mesure.
